# EUROPEAN PATENT APPLICATION

(11) **EP 4 566 888 A1**
(43) Date of publication of application: **11.06.2025**
(21) Application number: 24215405.2
(22) Date of filing: 26.11.2024
(51) Int. Cl.: B60R 1/08, B60R 1/26, B60R 1/12

(54) **REARVIEW DEVICE FOR VEHICLE**

(30) Priority: 05.12.2023 TW 112147259
(71) Applicant: Instant Technology Co., Ltd., Taipei City 114 (TW)
(72) Inventor: CHEN, Hsuan-Kang, 114 Taipei City (TW)
(74) Representative: Viering, Jentschura & Partner mbB Patent- und Rechtsanwälte

(57) **Abstract**

A rearview device (100) for vehicle includes a display unit (120) and a transparent switch unit (130). The display unit is disposed in a case (190), for showing a view toward an outside of the case. The transparent switch unit is disposed in the case and at a side of the display unit, for switching in a reflective mode and a transparent mode. The view is displayed toward the outside of the case through the transparent switch unit if the transparent switch unit is in the transparent mode. The view is masked by the transparent switch unit and an external light is reflected by the transparent switch unit if the transparent switch unit is in the reflective mode.

## Description

### CROSS REFERENCE TO RELATED APPLICATIONS

This present application claims the benefits of Taiwan Patent Application No. 112147259, filed on December 5, 2023.

### FIELD OF THE INVENTION

The present invention relates to the design of a rearview device. More particularly, the present invention relates to a rearview device for vehicle.

### BACKGROUND OF THE INVENTION

As vehicle becomes automotive, the number of electronic devices inside them also expands. Electronic rearview mirror, which use a screen mounted on a traditional rearview mirror to instantly display the view from the rear of the car, has also become common in luxury car. For SUVs or large vehicles with many blind spots or driving conditions in bad weather, the electronic rearview mirror compare to the traditional rearview mirror provides a wider driving vision as well as the function of a dash cam, so that the driving safety can be greatly improved.

When the electronic devices inside the vehicle become increase, the complexity of the use is risen. Otherwise, failures of the electronic devices in vehicle are common. Different from the failures of the general electronic devices, it is closely linked to the driving safety. The failures of the electronic devices in vehicle may cause danger and even lead to accidents. How to own the flexibility and the convenience in use on the electronic devices in vehicle, and how to provide driver an emergency response or keep the safety protection if it is failure, is actually one of the problems that the industry needs to solve urgently.

### SUMMARY OF THE PRESENT INVENTION

The present invention pertains to a rearview device for vehicle. By using a transparent switch unit to switch the rearview device between a reflective mode and a transparent mode, the rearview device can have the functions with both of an electronic rearview device and an optical rearview mirror, which providing the convenience in use. Otherwise, by a mechanism to switch to the reflective mode, the rearview device can reflect external light to achieve the function of the optical rearview mirror once if the electronic device is failure, thereby increasing the safety.

In order to achieve one, some or all of the above stated objectives or others, the embodiments of the present invention provide a rearview device for vehicle. The rearview device includes: a display unit disposed in a case, for showing a view toward an outside of the case; and a transparent switch unit disposed in the case and at a side of the display unit, for switching in a reflective mode and a transparent mode; wherein the view is displayed toward the outside of the case through the transparent switch unit if the transparent switch unit is in the transparent mode; wherein the view is masked by the transparent switch unit and an external light is reflected by the transparent switch unit if the transparent switch unit is in the reflective mode.

In an embodiment, the rearview device further includes: a processing unit, electrically connected to the transparent switch unit. Wherein the transparent switch unit is switched to the transparent mode if the processing unit provides a power signal to the transparent switch unit. The transparent switch unit is switched to the reflective mode if the processing unit stops the power signal.

In an embodiment, the processing unit is further electrically connected to the display unit. The power signal is stopped to the transparent switch unit by the processing unit so that the transparent switch unit is switched to the reflective mode if a detection signal from the display unit is not successfully received by the processing unit.

In an embodiment, the transparent switch unit is a TFT-LCD panel.

In another embodiment, the rearview device further includes: a processing unit, electrically connected to the display unit and the transparent switch unit; and a controller interface, electrically connected to the processing unit, for receiving an operating signal from an operating unit so as to operate the display unit and the transparent switch unit.

In an embodiment, the operating unit includes a touch panel, disposed in the case and at another side of the transparent switch unit opposite the display unit.

In an embodiment, the operating unit includes a physical bottom, disposed on the case, for being touched or pressed.

In an embodiment, the operating signal is from a controller area network bus (CAN bus) or from a portable mobile device, the portable mobile device is wirelessly or wiredly connected to the rearview device.

In another embodiment, the rearview device further includes: a processing unit, electrically connected to the display unit and the transparent switch unit; and an image input interface, electrically connected to the processing unit, wherein an image signal from a camera is received by the image input interface and is transmitted to the processing unit. Wherein the view showed by the display unit is correspond to the image signal.

In an embodiment, the image signal is captured by the camera, which is toward to a rear of the vehicle.

According to the rearview device for vehicle in the embodiments illustrated above, the rearview device can provide the convenience in use and increase the safety by using the transparent switch unit to easily switch in the reflective mode and the transparent mode.

### BRIEF DESCRIPTION OF THE DRAWINGS

Fig.1 presents a schematic diagram of a rearview device for vehicle according to an embodiment of the present invention.
Fig.2 presents a cross-sectional side view of the rearview device.
Fig.3 presents a block diagram of the rearview device.
Fig.4 presents a schematic diagram of a rearview device for vehicle in a reflective mode according to another embodiment of the present invention.
Fig.5 presents a cross-sectional side view of the rearview device in the reflective mode.

### DETAILED DESCRIPTION OF THE INVENTION

Those of skill in the art will recognize that various combinations of the embodiments disclosed herein may be combined to provide a rearview device for vehicle. The rearview device at least includes a display unit and a transparent switch unit. By using a transparent switch unit to switch the rearview device in a reflective mode and a transparent mode, one aspect of the rearview device is used for showing a view via the display unit; and another aspect of the rearview device is used for showing an reflected external light via the transparent switch unit. The rearview device can have the functions with both of an electronic rearview device and an optical rearview mirror, which providing the flexibility and the convenience in use. Otherwise, by a mechanism to switch to the reflective mode, the rearview device can reflect external light to achieve the function of the optical rearview mirror once if the electronic device is failure, thereby increasing the safety.

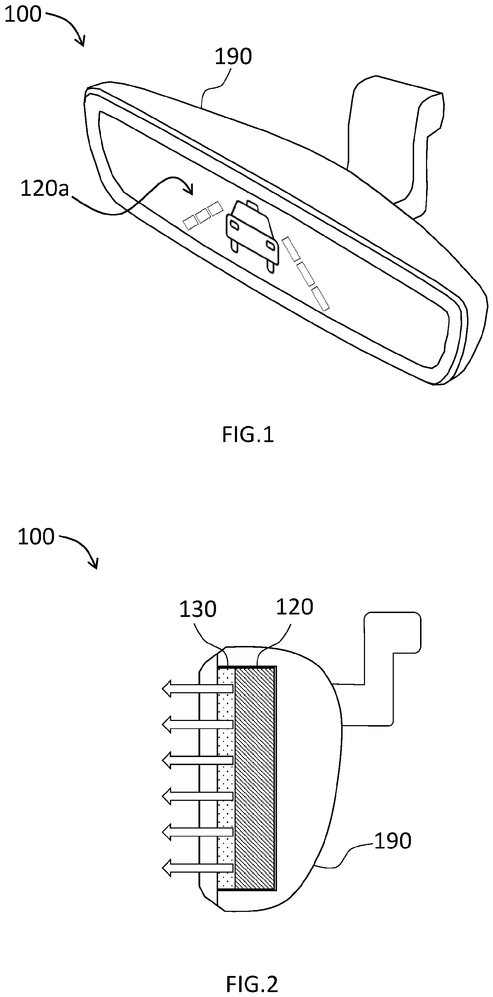

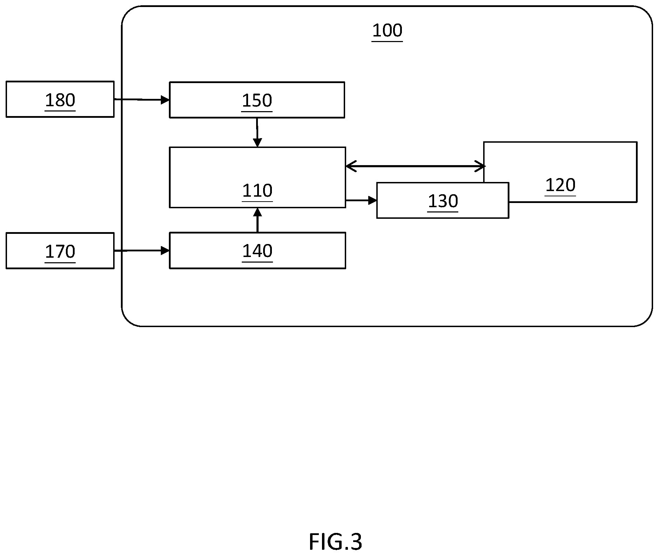

Please refer to Fig.1 to Fig.3. Fig.1 presents a schematic diagram of a rearview device for vehicle according to an embodiment of the present invention. Fig.2 presents a cross-sectional side view of the rearview device. Fig. 3 presents a block diagram of the rearview device.

The rearview device 100 according to the present invention includes a display unit 120 and a transparent switch unit 130. The display unit 120 is disposed in a case 190, for showing a view 120a toward an outside of the case 190. The transparent switch unit 130 is disposed in the case too, and at a side of the display unit 120, for switching in a reflective mode and a transparent mode. The view 120a is displayed toward the outside of the case 190 through the transparent switch unit 130 if the transparent switch unit 130 is in the transparent mode. The view 120a is masked by the transparent switch unit 130 and an external light is reflected by the transparent switch unit 130 if the transparent switch unit 130 is in the reflective mode.

Please refer to Fig.3, the rearview device 100 in the present invention further includes a processing unit 110, which is electrically connected to the transparent switch unit 130. The transparent switch unit 130 is switched to the transparent mode if the processing unit 110 provides a power signal to the transparent switch unit 130. The transparent switch unit 130 is switched to the reflective mode if the processing unit 110 stops the power signal. In this way, the transparent switch unit 130 can be controlled simply and quickly by providing the power signal or not. Whether the battery is low, the power is disconnected, or the rearview device 100 is damaged, the transparent switch unit 130 is switched to the reflective mode once the power is not supplied. The rearview device 100 reflects external light to achieve the function of the optical rearview mirror so that the safety is increased in practice.

The processing unit 110 in the present invention is further electrically connected to the display unit 120. Besides the signal of the view transmitted to the display unit 120, whether a detection signal from the display unit 120 is received in a specific period. If the detection signal from the display unit 120 is not successfully received by the processing unit 110, the power signal is stopped to the transparent switch unit 130 by the processing unit 110 so that the transparent switch unit 130 is switched to the reflective mode. In this way, whether the signal or the power is disconnected, or other reason, the transparent switch unit 130 is switched to the reflective mode once the display unit 120 is damaged. The rearview device 100 still has the function of the optical rearview mirror as a guarantee of safety when the display unit 120 is failure, and the safety is increased.

In an embodiment, the transparent switch unit 130 is a TFT-LCD panel. The liquid crystal is at a first pretilt angle when the power is supplied; and the liquid crystal is at a second pretilt angle when the power is not supplied. By switching the two pretilt angles of the liquid crystal, the transparent switch unit 130 can achieved the purpose of switching between a reflective mode and a transparent mode. The display unit 120 is, for example, a self-emissive organic light emitting diode display panel. However, in a different embodiment, the display unit 120 may also be a liquid crystal display panel with a backlight. The principle and structure of the display unit 120 is not limited in the present invention. Any display unit, that is lightweight, thin and can be installed in the case 190, can be used in the present invention.

The liquid crystal of the transparent switch unit 130 is at a first pretilt angle, shown by spots in Fig.2, when the power is supplied; thus, the transparent switch unit 130 can achieved the purpose of switching to a transparent mode. In the transparent mode, the view 120a from the display unit 120 can be through the transparent switch unit 130 so as to be displayed toward the outside of the case 190, as Fig. 1 and Fig. 2 shown. Driver can directly see the view 120a from the rearview device. At this time, the rearview device 100 has the same functions as the electronic rearview device. Various operations and processing on the view 120a can be performed by the rearview device 100, such as increasing brightness, reducing noise, superimposing various signs, etc., to enhance the image of the view 120a.

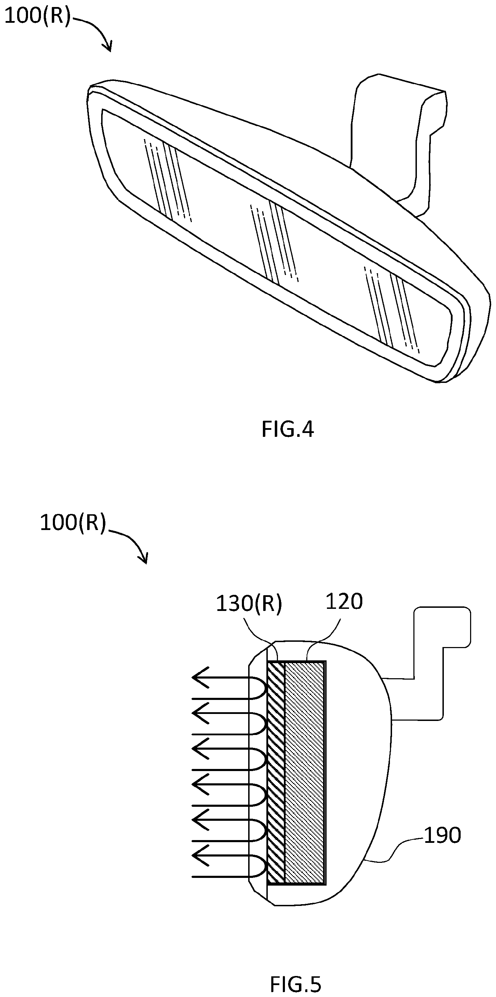

The liquid crystal of the transparent switch unit 130(R) is at a second pretilt angle, shown by slashes in Fig.5, when the power is not supplied; thus, the transparent switch unit 130(R) can achieved the purpose of switching to a reflective mode. Please refer to Fig.4 and Fig.5. Fig.4 presents a schematic diagram of a rearview device for vehicle in a reflective mode according to another embodiment of the present invention. Fig.5 presents a cross-sectional side view of the rearview device in the reflective mode. In the reflective mode, the view 120a is masked by the transparent switch unit 130(R) without the power supply, and an external light is reflected by the transparent switch unit 130(R). At this time, the rearview device 100 has the same functions as the optical rearview mirror, and can provide the driver with the purpose of directly viewing the road conditions behind. In the reflective mode, the display unit 120 is preferably not displayed and not emits any light, such as shutting down the backlight.

Please refer to Fig.3, the rearview device 100 in the present invention not only includes a processing unit 110, a display unit 120 and a transparent switch unit 130, also includes a controller interface 140. The controller interface 140 is electrically connected to the processing unit 110, for receiving an operating signal from an operating unit 170 so as to operate the display unit 120 and the transparent switch unit 130. User can switch the rearview device 100 to a reflective mode or a transparent mode, or make any adjustment to the view 120a by the operating unit 170.

In a part of the embodiments, the operating unit 170 can be an internal unit of the rearview device 100. In an embodiment, the operating unit 170 includes a touch panel, which is disposed in the case 190 and at another side of the transparent switch unit 130 opposite the display unit 120; it means that the display unit 120 is closer to the outside of the case 190 so as to let user friendly touch and operate. In another embodiment, the operating unit 170 includes a physical bottom, which is disposed on the case 190, for being touched or pressed. The physical bottom can be a mechanical button, a thermal button, a pressuresensitive button, or other available physical operation interfaces that are different from touch panel.

In another part of the embodiments, the operating unit 170 can be an external device of the rearview device 100; it means that operating signal is transmitted from the external device. In an embodiment, the operating signal is from a vehicle controller area network bus (CAN bus). Driver can operate and control the rearview device 100 via the interface provided by the vehicle. In another embodiment, the operating signal is from a portable mobile device, and the portable mobile device is wirelessly or wiredly connected to the rearview device 100. The portable mobile device, for example a smart phone, is wirelessly connected to the rearview device 100 by Bluetooth or WiFi, or is wiredly connected to the rearview device 100 by USB cable. The method of the connection and the structure of the communication thereof are not limited in the present invention.

Please refer to Fig.3 again, the rearview device 100 in the present invention further includes an image input interface 150, which is electrically connected to the processing unit 110. An image signal from a camera 180 is received by the image input interface 150 and is transmitted to the processing unit 110. Wherein the view 120a showed by the display unit 120 is correspond to the image signal. In an embodiment, the image signal is captured by the camera 180, which is toward to the rear of the vehicle. The camera 180 can be toward to the sides of the vehicle, depending on the actual requirement. The specification and the structure of the camera 180 is not limited in the present invention. No matter what the imaging principle is, such as visible light, infrared light, ultrasound or others, the image can be captured and the image signal is provided to the image input interface 150, can be applied in the present invention.

The rearview device for vehicle in the embodiments illustrated above, includes a display unit and a transparent switch unit. The display unit is disposed in a case, for showing a view toward an outside of the case. The transparent switch unit is disposed in the case too, and at a side of the display unit, for switching in a reflective mode and a transparent mode. The view is displayed toward the outside of the case through the transparent switch unit if the transparent switch unit is in the transparent mode. The view is masked by the transparent switch unit and an external light is reflected by the transparent switch unit if the transparent switch unit is in the reflective mode. By switching to a reflective mode and a transparent mode, one aspect of the rearview device in the present invention is used for showing a view via the display unit; and another aspect of the rearview device is used for showing a reflected external light via the transparent switch unit. The rearview device can have the functions with both of an electronic rearview device and an optical rearview mirror, which providing the flexibility and the convenience in use. In some embodiments, by an auto-mechanism to switch to the reflective mode, the rearview device can reflect external light to achieve the function of the optical rearview mirror once if the electronic device is in the power outage or the display unit is failure, thereby increasing the safety.

## Claims

1. A rearview device for vehicle, comprises:
a display unit disposed in a case, for showing a view toward an outside of the case; and,
a transparent switch unit disposed in the case and at a side of the display unit, for switching between a reflective mode and a transparent mode;
wherein the view is displayed toward the outside of the case through the transparent switch unit if the transparent switch unit is in the transparent mode; wherein the view is masked by the transparent switch unit and an external light is reflected by the transparent switch unit if the transparent switch unit is in the reflective mode.

2. The rearview device of claim 1, further comprising:
a processing unit, electrically connected to the transparent switch unit; wherein the transparent switch unit is switched to the transparent mode if the processing unit provides a power signal to the transparent switch unit; the transparent switch unit is switched to the reflective mode if the processing unit stops the power signal.

3. The rearview device of claim 2, wherein the processing unit is electrically connected to the display unit; wherein the power signal is stopped to the transparent switch unit by the processing unit so that the transparent switch unit is switched to the reflective mode if a detection signal from the display unit is not successfully received by the processing unit.

4. The rearview device of claim 1, wherein the transparent switch unit comprises a plurality of liquid crystals, wherein the liquid crystal is at a first pretilt angle when the power is supplied to the transparent switch unit; so the transparent switch unit is switched to the transparent mode; or, the liquid crystal is at a second pretilt angle when the power is not supplied, so the transparent switch unit is switched to the reflective mode.

5. The rearview device of claim 1, wherein the transparent switch unit is a TFT-LCD panel.

6. The rearview device of claim 1, further comprising;
a processing unit, electrically connected to the display unit and the transparent switch unit; and
a controller interface, electrically connected to the processing unit, for receiving an operating signal from an operating unit so as to operate the display unit and the transparent switch unit.

7. The rearview device of claim 6, wherein the operating unit comprises a touch panel, disposed in the case and at another side of the transparent switch unit opposite the display unit.

8. The rearview device of claim 6, wherein the operating unit comprises a physical bottom, disposed on the case, for being touched or pressed.

9. The rearview device of claim 6, wherein the operating signal is from a controller area network bus (CAN bus) or from a portable mobile device, the portable mobile device is wirelessly or wiredly connected to the rearview device.

10. The rearview device of claim 1, further comprising;
a processing unit, electrically connected to the display unit and the transparent switch unit; and
an image input interface, electrically connected to the processing unit, wherein an image signal from a camera is received by the image input interface and is transmitted to the processing unit,
wherein the view showed by the display unit is correspond to the image signal.

11. The rearview device of claim 10, wherein the image signal is captured by the camera, which is toward to a rear of the vehicle.
